# EUROPEAN PATENT APPLICATION

(11) **EP 3 862 632 A1**
(43) Date of publication of application: **11.08.2021**
(21) Application number: 19868812.9
(22) Date of filing: 02.10.2019
(51) Int. Cl.: F23R 3/16, F02C 7/24, F23R 3/14, F23R 3/28

(54) **ANNULAR GAS TURBINE COMBUSTOR FOR AIRPLANES**

(30) Priority: 02.10.2018 JP 2018187514
(71) Applicant: Kawasaki Jukogyo Kabushiki Kaisha, Hyogo 650-8670 (JP); Japan Aerospace Exploration Agency, Tokyo 182-8522 (JP)
(72) Inventor: MATSUYAMA, Ryusuke, Hyogo 650-8670 (JP); YOSHIDA, Seiji, Tokyo 182-8522 (JP); FUJIWARA, Hitoshi, Tokyo 182-8522 (JP)
(74) Representative: Dantz, Jan Henning
(86) International application number: PCT/JP2019/038850
(87) International publication number: WO 2020/071399

(57) **Abstract**

An annular gas turbine combustor for use in an aircraft includes a plurality of resonators having respective resonance chambers and arranged in a fuel injector arrangement space so as to be lined up with fuel injectors in a radial direction of the fuel injector. A bulkhead configured to separate a combustion chamber and the fuel injector arrangement space from each other includes a plurality of openings each of which is arranged between each resonance chamber and the combustion chamber. The resonance chambers communicate with the combustion chamber through the openings. At least part of each of the resonance chambers is arranged at a radially inner side of a largest outer diameter portion of an outer liner when viewed in an axial direction of the fuel injector.

## Description

### Technical Field

The present invention relates to an annular gas turbine combustor applied to an aircraft and including an annular combustion chamber surrounded by an annular inner liner and an annular outer liner.

### Background Art

According to a gas turbine combustor, combustion vibration may be generated by flame propagation in a combustion chamber. When the combustion vibration is large, durability of component parts of the combustor and durability of peripheral parts of the combustor are adversely affected, and acoustic noise becomes large. Therefore, various combustors provided with resonators which utilize a vibration absorbing effect achieved by resonance have been proposed. According to a combustor of PTL 1, a Helmholtz resonator (resonator) is provided in the vicinity of a diffuser located upstream of a fuel injector. According to a combustor of PTL 2, a resonance tube (resonator) is provided at a radially outer side of a combustion chamber. Each of these combustors is an annular combustor including an annular combustion chamber surrounded by an annular inner liner and an annular outer liner and is more advantageous than a can combustor in terms of size reduction. Especially, since aircraft engines are required to be reduced in size and weight, annular combustors are used.

### Citation List

### Patent Literature

PTL 1: Japanese Laid-Open Patent Application Publication No. 2017-72359
PTL 2: Published Japanese Translation of PCT Application No. 2012-514177

### Summary of Invention

### Technical Problem

According to the configuration of PTL 1, the resonator is provided at a position far away from the combustion chamber so as to be located upstream of the combustion chamber. Therefore, before the combustion vibration of the combustion chamber reaches the resonator, the combustion vibration is transmitted to the fuel injector and the like, and the vibration absorbing effect is inadequate. According to the configuration of PTL 2, since the resonance tube projects outward in a radial direction from the combustion chamber, the combustor increases in size. Moreover, according to an aircraft annular combustor which is required to be reduced in size, it is not realistic to provide a special occupied space for the resonator.

An object of the present invention is to provide an annular gas turbine combustor for use in an aircraft, the annular gas turbine combustor being able to effectively absorb combustion vibration while being prevented from increasing in size.

### Solution to Problem

An annular gas turbine combustor for use in an aircraft according to one aspect of the present invention includes: an annular combustion chamber surrounded by an annular inner liner and an annular outer liner; a plurality of fuel injectors configured to inject fuel into the combustion chamber and arranged in a fuel injector arrangement space, located upstream of the combustion chamber, so as to be provided in an annular shape along the combustion chamber; a bulkhead configured to separate the combustion chamber and the fuel injector arrangement space from each other and including through holes through which the fuel injectors are exposed to the combustion chamber; and a plurality of resonators including respective resonance chambers and arranged in the fuel injector arrangement space so as to be lined up with the fuel injectors in a radial direction of the fuel injector. The bulkhead includes a plurality of openings each of which is arranged between each resonance chamber and the combustion chamber. The resonance chambers communicate with the combustion chamber through the openings. At least part of each of the resonance chambers is arranged at a radially inner side of a largest outer diameter portion of the outer liner when viewed in an axial direction of the fuel injector.

According to the above configuration, the resonators are arranged close to the combustion chamber, and the combustion vibration generated at the combustion chamber is transmitted to the resonance chambers of the resonators. Therefore, the combustion vibration is effectively absorbed, and the combustor is prevented from significantly vibrating. Moreover, the resonance chambers of the resonators are arranged in the fuel injector arrangement space so as to be lined up with the fuel injectors in the radial direction of the fuel injector and are arranged at the radially inner side of the largest outer diameter portion of the outer liner when viewed in the axial direction of the combustion chamber. Therefore, the combustor is prevented from increasing in size.

At least part of each of the resonators may be formed integrally with the bulkhead.

According to the above configuration, since the bulkhead itself constitutes part of the resonator, the combustion vibration can be suitably absorbed while suppressing an increase in the number of parts.

The bulkhead may include a dividing wall main body portion configured to separate the combustion chamber and the fuel injector arrangement space from each other and a projecting wall portion projecting from the dividing wall main body portion toward the fuel injector arrangement space. Each of the resonators may be constituted by the dividing wall main body portion, the projecting wall portion, and a lid portion covering a space from the fuel injector arrangement space side, the space being surrounded by the dividing wall main body portion and the projecting wall portion. Each of the resonance chambers may be defined by the dividing wall main body portion, the projecting wall portion, and the lid portion. The openings may be formed at the dividing wall main body portion and communicate with the respective resonance chambers.

According to the above configuration, the configuration in which at least part of the resonator is formed integrally with the bulkhead can be simply formed. It should be noted that the lid portion may be formed separately from or integrally with the bulkhead.

Each of the resonators may include a container portion defining the resonance chamber and a tubular portion defining a port portion and projecting from the container portion, the port portion communicating with the resonance chamber. The tubular portions of the resonators may be inserted into the respective openings of the bulkhead. The resonance chambers may communicate with the combustion chamber through the port portions arranged at the openings.

According to the above configuration, since the resonator is formed separately from the bulkhead, the degree of freedom of the design of the resonator can be improved.

The annular gas turbine combustor may further include: a combustor casing; and stems by which the fuel injectors are fixed to the combustor casing. Each of the resonators may be arranged between the bulkhead and the corresponding stem in the axial direction.

According to the above configuration, the increase in size of the combustor in the axial direction of the fuel injector can be prevented.

Each of the resonators may be arranged so as to be separated from the fuel injector outward in the radial direction with a gap.

According to the above configuration, since the resonator is arranged away from the fuel injector, the degree of freedom of the arrangement of the resonator can be improved.

Each of the fuel injectors may include a swirler provided at an outer peripheral portion of the fuel injector and configured to take in air from an outside in the radial direction. Each of the resonators may be arranged so as to sandwich the gap together with the swirler.

According to the above configuration, even when the resonator is arranged so as to be lined up with the fuel injector in the radial direction of the fuel injector, the fuel injector can take in the air from the radially outer side.

The plurality of resonators may include resonators arranged in a space between the fuel injectors lined up in an annular shape at intervals.

According to the above configuration, since the resonators are arranged by effectively utilizing the space between the adjacent fuel injectors, the increase in size of the combustor can be suitably prevented.

The plurality of resonators may include resonators arranged along at least one of an upstream end of the inner liner and an upstream end of the outer liner when viewed in the axial direction of the fuel injector.

According to the above configuration, the vibration generated in the vicinity of an outer peripheral surface of the inner liner and an inner peripheral surface of the outer liner can be suitably suppressed.

The plurality of resonators may include resonators having the respective resonance chambers which are different in volume from each other.

According to the above configuration, a plurality of vibration frequency components which are different from each other in the combustion vibration generated at the combustion chamber can be suitably absorbed.

The annular gas turbine combustor may further include a heat shield covering the bulkhead from the combustion chamber side. The bulkhead may include protruding portions projecting toward the heat shield and including the respective openings. The heat shield may include exposure holes in which the protruding portions of the bulkhead are fitted.

According to the above configuration, a temperature of the air in the resonance chamber of the resonator is maintained close to a temperature of an inlet of the combustor by the heat shield. Therefore, vibration absorption performance of the resonator is hardly influenced by a temperature change, and the designed vibration absorption performance is achieved. Moreover, the protruding portions of the bulkhead are fitted in the exposure holes of the heat shield. With this, even though the heat shield is provided, the combustion vibration of the combustion chamber can be suitably introduced to the resonance chambers through the heat shield.

The plurality of resonators may be arranged along an outer peripheral edge of the bulkhead.

According to the above configuration, the resonators can be arranged as many as possible.

### Advantageous Effects of Invention

The present invention can provide an annular gas turbine combustor for use in an aircraft, the annular gas turbine combustor being able to effectively absorb combustion vibration while being prevented from increasing in size.

### Brief Description of Drawings

FIG. 1 is a schematic sectional view showing an annular gas turbine combustor according to an embodiment when viewed from a downstream side in an axial direction of the annular gas turbine combustor.
FIG. 2 is a sectional view taken along line II-II of the combustor shown in FIG. 1.
FIG. 3 is an enlarged view showing major components of the combustor shown in FIG. 2.
FIG. 4 is a diagram showing a bulkhead and resonators in the combustor shown in FIG. 3 when viewed from the downstream side in the axial direction.
FIG. 5 is a sectional view schematically showing Modified Example 1 of the resonator shown in FIG. 3.
FIG. 6A is a sectional view schematically showing Modified Example 2 of the resonator, and FIG. 6B is a sectional view schematically showing Modified Example 3 of the resonator.
FIG. 7A is a sectional view schematically showing Modified Example 4 of the resonator, and FIG. 7B is a sectional view schematically showing Modified Example 5 of the resonator.

### Description of Embodiments

Hereinafter, an embodiment will be described with reference to the drawings.

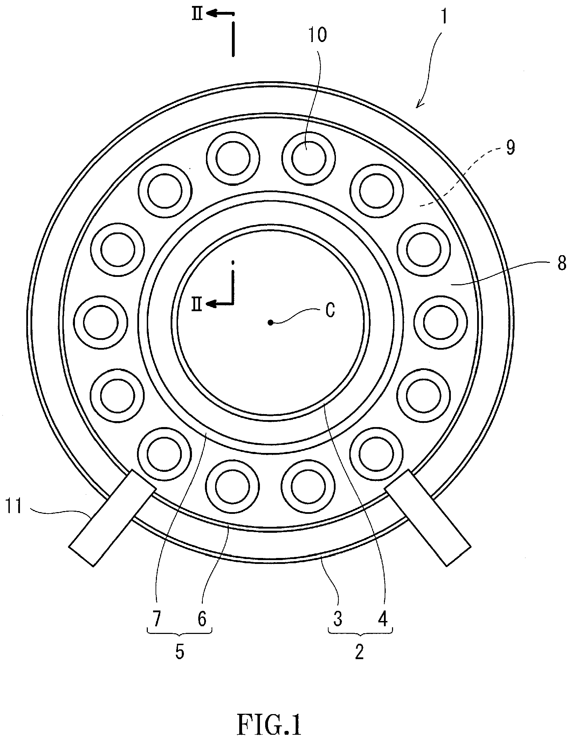

FIG. 1 is a schematic diagram showing an annular gas turbine combustor 1 according to an embodiment when viewed from a downstream side in an axial direction of the annular gas turbine combustor 1. The combustor 1 is a combustor of a gas turbine used as an aircraft engine. The combustor 1 mixes compressed air, supplied from a compressor (not shown), with fuel to generate a fuel-air mixture, and then, combusts the fuel-air mixture to generate high-temperature and high-pressure combustion gas. The generated combustion gas is supplied to a turbine (not shown) to drive the turbine.

The combustor 1 is an annular combustor formed in an annular shape surrounding a center axis C of the gas turbine. The combustor 1 includes a combustor casing 2. The combustor casing 2 includes an annular outer casing 3 and an annular inner casing 4 concentrically arranged inside the outer casing 3. The outer casing 3 and the inner casing 4 forms an annular internal space. A combustion liner 5 is arranged in the annular internal space of the combustor casing 2 so as to be concentric with the combustor casing 2. The combustion liner 5 includes an annular outer liner 6 and an annular inner liner 7 concentrically arranged inside the outer liner 6. An annular space surrounded by the outer liner 6 and the inner liner 7 is utilized as a combustion chamber 8.

A plurality of fuel injectors 10 configured to inject fuel into the combustion chamber 8 are arranged in a fuel injector arrangement space 9, located upstream of the combustion chamber 8, so as to be provided in an annular shape along the combustion chamber 8. The plurality of fuel injectors 10 are lined up at regular intervals in a circumferential direction on a virtual circle concentric with the combustion liner 5. Ignition plugs 11 are provided at the combustion liner 5. Each of the ignition plugs 11 generates ignition spark in the combustion chamber 8 when starting up the gas turbine.

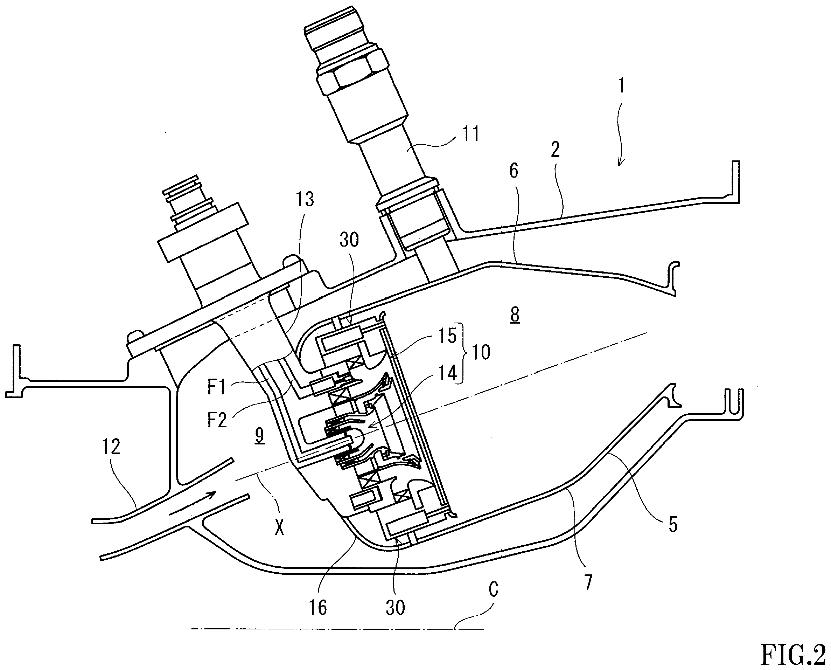

FIG. 2 is a sectional view taken along line II-II of the combustor 1 shown in FIG. 1. In FIG. 2, a side where the ignition plug 11 exists is a radially outer side of the gas turbine, and a side where the center axis C exists is a radially inner side of the gas turbine. Moreover, a side where a diffuser 12 exists is an upstream side, and a side where an outlet of the combustion chamber 8 exists is a downstream side. As shown in FIG. 2, the diffuser 12 through which the compressed air generated by the compressor (not shown) is taken into the combustor casing 2 is provided at an upstream portion of the combustor casing 2. The compressed air taken into the combustor casing 2 is supplied to the fuel injector 10 and also supplied to the combustion chamber 8 in the combustion liner 5 through a plurality of air holes (not shown) formed at the combustion liner 5.

The fuel injector 10 is supported by a stem 13 fixed to the combustor casing 2. The fuel injector 10 includes a pilot fuel injection portion 14 and a main fuel injection portion 15 arranged so as to surround an outer periphery of the pilot fuel injection portion 14. The pilot fuel injection portion 14 generates diffusion combustion, and the main fuel injection portion 15 generates lean combustion. Liquid fuel is supplied to the pilot fuel injection portion 14 through a fuel passage F1 formed in the stem 13 and is also supplied to the main fuel injection portion 15 through a fuel passage F2 formed in the stem 13. A cowl 16 is provided at an upstream side of the combustion liner 5. The cowl 16 straightens the compressed air supplied from the diffuser 12 and guides the compressed air to a space between the combustor casing 2 and the combustion liner 5.

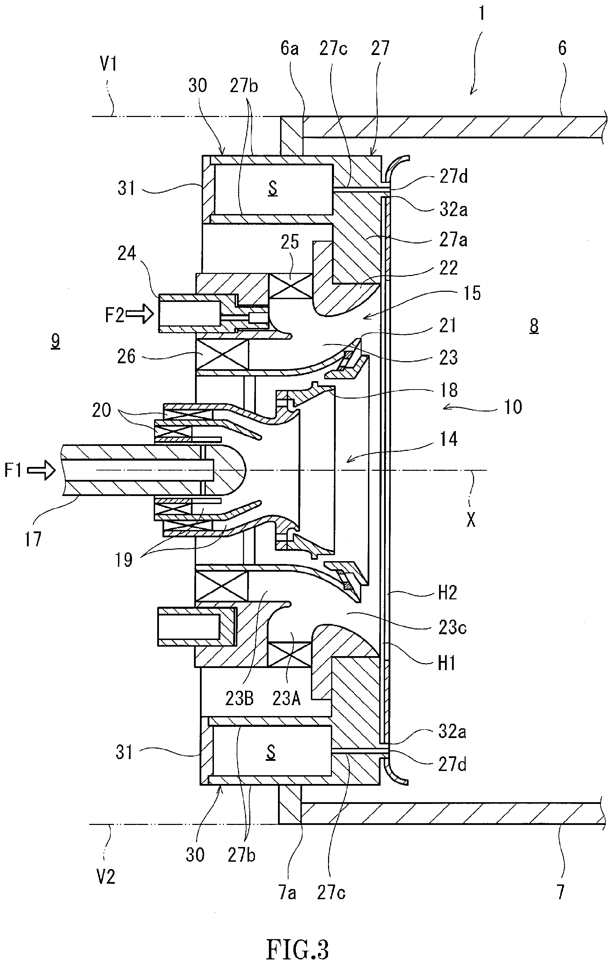

FIG. 3 is an enlarged view showing major components of the combustor 1 shown in FIG. 2. As shown in FIG. 3, the fuel injector 10 includes the pilot fuel injection portion 14 and the main fuel injection portion 15. The pilot fuel injection portion 14 is arranged on an axis X of the fuel injector 10. The main fuel injection portion 15 is arranged so as to surround the pilot fuel injection portion 14 from the radially outer side. It should be noted that the configuration of the fuel injector 10 is not especially limited, and the configuration shown in FIG. 3 is merely one example.

The pilot fuel injection portion 14 includes a pilot fuel supply nozzle 17, a tubular pilot shroud 18, and annular pilot air passages 19. The pilot fuel supply nozzle 17 injects the fuel supplied from the fuel passage F1. The pilot shroud 18 is arranged away from the pilot fuel supply nozzle 17 at a radially outer side of the pilot fuel supply nozzle 17 and projects toward a downstream side in a direction along the axis X beyond the pilot fuel supply nozzle 17. The pilot air passages 19 are provided between the pilot fuel supply nozzle 17 and the pilot shroud 18. A swirling stream flows through the pilot air passages 19 toward the downstream side of the pilot fuel supply nozzle 17. It should be noted that in the example of FIG. 3, two pilot air passages 19 are concentrically provided.

Inlets of the pilot air passages 19 are open toward the fuel injector arrangement space 9 and take in the compressed air supplied from the diffuser 12 (see FIG. 2). Pilot swirlers 20 are provided at inlets of the pilot air passages 19 and make the compressed air swirl about the axis X. The fuel injected from the pilot fuel supply nozzle 17 and the compressed air passing through the pilot air passages 19 pass through a space surrounded by the pilot shroud 18, are supplied to the combustion chamber 8, and are subjected to diffusion combustion.

The main fuel injection portion 15 includes a tubular inner main shroud 21, a tubular outer main shroud 22, an annular main air passage 23, and a main fuel supply nozzle 24. The outer main shroud 22 is arranged away from the inner main shroud 21 at the radially outer side of the inner main shroud 21. The main air passage 23 is formed between the inner main shroud 21 and the outer main shroud 22. The main fuel supply nozzle 24 injects the fuel, supplied from the fuel passage F2, into the main air passage 23. In the main air passage 23, pre-mixed gas is generated and supplied as a swirling stream to the combustion chamber 8.

The main air passage 23 includes an outside main air passage 23A, an inside main air passage 23B, and a join main air passage 23C. The inside main air passage 23B is provided at a radially inner side of the outside main air passage 23A. The outside main air passage 23A and the inside main air passage 23B join each other at the join main air passage 23C, and the join main air passage 23C communicates with the combustion chamber 8. An inlet of the outside main air passage 23A is open outward in the radial direction. An outside main swirler 25 configured to make the compressed air swirl about the axis X is provided at the inlet of the outside main air passage 23A. An inlet of the inside main air passage 23B is open toward an upstream side in the direction along the axis X. An inside main swirler 26 configured to make the compressed air swirl about the axis X is provided at the inlet of the inside main air passage 23B.

The outside main swirler 25 is a swirler of the main fuel injection portion 15 and is arranged at an outermost side in the radial direction among all the swirlers 20, 25, and 26 of the fuel injector 10. The outside main swirler 25 is, for example, a radial swirler which takes in the compressed air from the radially outer side toward the radially inner side. However, the outside main swirler 25 does not have to be the radial swirler. The compressed air taken in by the outside main air passage 23A and the compressed air taken in by the inside main air passage 23B join in the join main air passage 23C and are injected into the combustion chamber 8. The fuel injected by the main fuel supply nozzle 24 into the main air passage 23 is adequately premixed with the compressed air, is supplied to the combustion chamber 8, and is subjected to lean combustion.

A bulkhead 27 is arranged between the combustion chamber 8 and the fuel injector arrangement space 9. To be specific, the bulkhead 27 separates the combustion chamber 8 and the fuel injector arrangement space 9 from each other. The bulkhead 27 includes through holes H1 through which the respective fuel injectors 10 are exposed to the combustion chamber 8. A downstream end portion of each fuel injector 10 is inserted into the corresponding through hole H1 of the bulkhead 27. Specifically, the outer main shroud 22 of the fuel injector 10 is internally fitted in the through hole H1 of the bulkhead 27. An outer peripheral portion of the bulkhead 27 is fixed to an upstream end 6a of the outer liner 6, and an inner peripheral portion of the bulkhead 27 is fixed to an upstream end 7a of the inner liner 7.

In the fuel injector arrangement space 9, a plurality of resonators 30 are arranged so as to be lined up with the fuel injectors 10 in a radial direction of the fuel injector 10. When viewed in the direction along the axis X of the fuel injector 10, each resonator 30 includes a resonance chamber S arranged at the radially inner side of a largest outer diameter portion (portion having a largest outer diameter) of the outer liner 6 and the radially outer side of a smallest inner diameter portion (portion having a smallest inner diameter) of the inner liner 7. For example, the resonator 30 is arranged at the radially inner side of a virtual cylindrical surface V1 extending from the upstream end 6a of the outer peripheral surface of the outer liner 6 toward the upstream side so as to have a constant diameter and is arranged at the radially outer side of a virtual cylindrical surface V2 extending from the upstream end 7a of the inner peripheral surface of the inner liner 7 toward the upstream side so as to have a constant diameter. It should be noted that the upstream end 6a of the outer peripheral surface of the outer liner 6 is a portion of the outer peripheral surface of the outer liner 6 which portion is the same in position in the direction along the axis X as the upstream end of the combustion chamber 8. Moreover, the upstream end 7a of the inner peripheral surface of the inner liner 7 is a portion of the inner peripheral surface of the inner liner 7 which portion is the same in position in the direction along the axis X as the upstream end of the combustion chamber 8.

The resonator 30 may be formed separately from the bulkhead 27. In the present embodiment, the resonator 30 is formed integrally with the bulkhead 27. Specifically, the bulkhead 27 includes a dividing wall main body portion 27a and a projecting wall portion 27b. The dividing wall main body portion 27a separates the combustion chamber 8 and the fuel injector arrangement space 9 from each other. The projecting wall portion 27b projects from the dividing wall main body portion 27a toward the fuel injector arrangement space 9. The resonator 30 is constituted by the dividing wall main body portion 27a, the projecting wall portion 27b, and a lid portion 31. The lid portion 31 covers, from the fuel injector arrangement space 9 side, a space surrounded by the dividing wall main body portion 27a and the projecting wall portion 27b. To be specific, the resonance chamber S is defined by the dividing wall main body portion 27a, the projecting wall portion 27b, and the lid portion 31.

In the present embodiment, the lid portion 31 is formed separately from the bulkhead 27 and is attached to the projecting wall portion 27b so as to be replaceable. However, the lid portion 31 may be formed integrally with the bulkhead 27. Moreover, the resonance chamber S of the present embodiment is open to an outside through only an opening 27c, and the lid portion 31 and the projecting wall portion 27b have no openings. However, a small cooling hole may be provided at the lid portion 31 or the projecting wall portion 27b.

The opening 27c is formed at the dividing wall main body portion 27a of the bulkhead 27 so as to be arranged between each resonance chamber S and the combustion chamber 8. The opening 27c is smaller than the resonance chamber S when viewed in the direction along the axis X. The resonance chamber S communicates with the combustion chamber 8 through the opening 27c. With this, the combustion vibration generated in the combustion chamber 8 is transmitted through the opening 27c to the resonance chamber S, and thus, the combustion vibration is absorbed.

As above, the bulkhead 27 itself constitutes part of each resonator 30. With this, the combustion vibration can be suitably absorbed while suppressing an increase in the number of parts.

The resonator 30 is arranged between the bulkhead 27 and the stem 13 in the direction along the axis X (see FIG. 2). To be specific, the position of the resonator 30 in the direction along the axis X overlaps the position of the fuel injector 10 in the direction along the axis X. With this, the combustor 1 is prevented from increasing in size in the direction along the axis X of the fuel injector 10.

The resonator 30 is arranged at an outside of the fuel injector 10 in the radial direction of the fuel injector 10 so as to be spaced apart from the fuel injector 10. To be specific, the resonator 30 is arranged away from the fuel injector 10. Specifically, the resonator 30 is arranged such that a gap is formed between the resonator 30 and the outside main swirler 25 in the radial direction. With this, even when the resonator 30 is arranged so as to be lined up with the fuel injector 10 in the radial direction of the fuel injector 10, the fuel injector 10 can take in the air from the radially outer side.

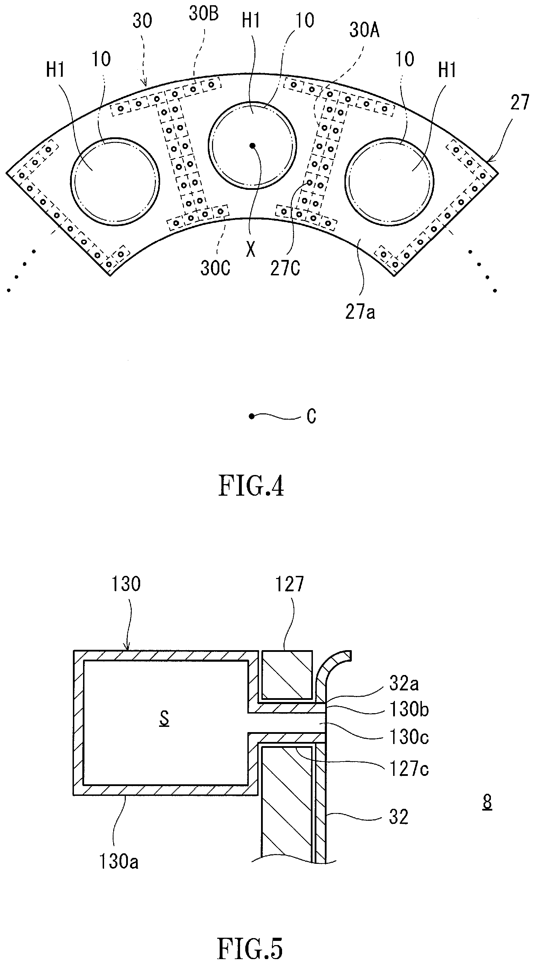

FIG. 4 is a diagram showing the bulkhead 27 and the resonators 30 in the combustor 1 shown in FIG. 3 when viewed from the downstream side in the direction along the axis X. As shown in FIG. 4, the plurality of resonators 30 of the combustor 1 includes a plurality of resonators 30A arranged in a space between the fuel injectors 10 lined up in an annular shape at intervals. The plurality of resonators 30A are provided in parallel in the radial direction of the bulkhead 27. For example, the resonators 30A are arranged in plural rows (two rows in FIG. 4) in the space between the fuel injectors 10. With this, since the resonators 30A are arranged by effectively utilizing the space between the adjacent fuel injectors 10, the combustor 1 is prevented from increasing in size. It should be noted that the resonators 30A may be arranged in one row in the space between the fuel injectors 10.

The plurality of resonators 30 of the combustor 1 further includes resonators 30B arranged along the upstream end 6a of the outer liner 6 when viewed in the direction along the axis X of the fuel injector 10 and resonators 30C arranged along the upstream end 7a of the inner liner 7 when viewed in the direction along the axis X of the fuel injector 10. According to this, vibration generated in the vicinity of the inner peripheral surface of the outer liner 6 and the outer peripheral surface of the inner liner 7 is suitably suppressed. In FIG. 4, the resonators 30B and 30C are partially provided in the circumferential direction of the bulkhead 27. However, the resonators 30B and 30C may be entirely provided in the circumferential direction of the bulkhead 27. Moreover, the resonators 30B and/or the resonators 30C may be omitted.

The plurality of resonators 30 include resonators having the respective resonance chambers S which are different in volume from each other. For example, the plurality of resonators 30 include resonators having the respective resonance chambers S which are the same in volume as each other and resonators having the respective resonance chambers S which are different in volume from each other. With this, a plurality of vibration frequency components which are different from each other in the combustion vibration generated by the combustion chamber 8 can be suitably absorbed. It should be noted that the shape of the resonance chamber S is not especially limited, and for example, may be a rectangular solid shape, a cylindrical shape, or a conical shape.

As shown in FIG. 3, the bulkhead 27 is covered with a heat shield 32 from the combustion chamber 8 side. When viewed in the direction along the axis X of the fuel injector 10, an outer shape of the heat shield 32 is substantially the same as an outer shape of the bulkhead 27. The heat shield 32 includes through holes H2 which coincide with the through holes H1 of the bulkhead 27. To be specific, each fuel injector 10 is exposed to the combustion chamber 8 through the corresponding through hole H1 of the bulkhead 27 and the corresponding through hole H2 of the heat shield 32.

The bulkhead 27 includes protruding portions 27d having the respective openings 27c and projecting toward the heat shield 32. To be specific, the opening 27c is open toward the combustion chamber 8 on an end surface, located close to the combustion chamber 8, of the protruding portion 27d. The heat shield 32 includes exposure holes 32a in which the protruding portions 27d of the bulkhead 27 are fitted. With this, even though the bulkhead 27 is covered with the heat shield 32, the combustion chamber 8 communicates with the resonance chambers S through the openings 27c. It should be noted that the protruding portions 27d of the bulkhead 27 may or may not be fixed to the exposure holes 32a of the heat shield 32. When fixing the protruding portions 27d to the heat shield 32, a method, such as welding, brazing, or bolting, may be used.

A temperature of the air in the resonance chamber S of the resonator 30 is maintained close to a temperature of an inlet of the combustor 1 by the heat shield 32. Therefore, vibration absorption performance of the resonator 30 is hardly influenced by a temperature change, and the designed vibration absorption performance is easily achieved. Moreover, the protruding portions 27d of the bulkhead 27 are fitted in the exposure holes 32a of the heat shield 32. With this, even though the heat shield 32 is provided, the combustion vibration of the combustion chamber 8 is suitably introduced to the resonance chambers S through the heat shield 32. It should be noted that the openings 27c of the bulkhead 27 may be exposed to the combustion chamber 8 at the exposure holes 32a of the heat shield 32 without providing the protruding portions 27d.

According to the above configuration, the resonators 30 are arranged close to the combustion chamber 8, and the combustion vibration generated at the combustion chamber 8 is transmitted to the resonance chambers S of the resonators 30 through the openings 27c. Therefore, the combustion vibration is effectively absorbed, and the combustor 1 can be prevented from significantly vibrating. Moreover, the resonance chambers S of the resonators 30 are arranged in the fuel injector arrangement space 9 so as to be lined up with the fuel injectors 10 in the radial direction of the fuel injector 10, and when viewed in the direction along the axis X, the resonance chambers S of the resonators 30 are arranged at the radially inner side of the upstream end 6a of the outer liner 6. Therefore, the combustor 1 is prevented from increasing in size.

FIG. 5 is a sectional view schematically showing Modified Example 1 of a resonator 130 shown in FIG. 3. As shown in FIG. 5, the resonator 130 of Modified Example 1 is formed separately from a bulkhead 127. The resonator 130 includes a container portion 130a and a tubular portion 130b. The container portion 130a defines the resonance chamber S. The tubular portion 130b defines a port portion 130c and projects from the container portion 130a. The port portion 130c communicates with the resonance chamber S. The tubular portion 130b of the resonator 130 is inserted into an opening 127c of the bulkhead 127 and the exposure hole 32a of the heat shield 32. It should be noted that the tubular portion 130b of the resonator 130 may or may not be fixed to the exposure hole 32a of the heat shield 32. When fixing the tubular portion 130b to the heat shield 32, a method, such as welding, brazing, or bolting, may be used.

The resonance chamber S of the resonator 130 communicates with the combustion chamber 8 through the port portion 130c arranged at the opening 127c of the bulkhead 127. Since the resonator 130 is formed separately from the bulkhead 127, the degree of freedom of the design of the resonator 130 can be improved. The tubular portion 130b of the resonator 130 may be configured to be inserted into the opening 127c of the bulkhead 127 but not to be inserted into the exposure hole 32a of the heat shield 32.

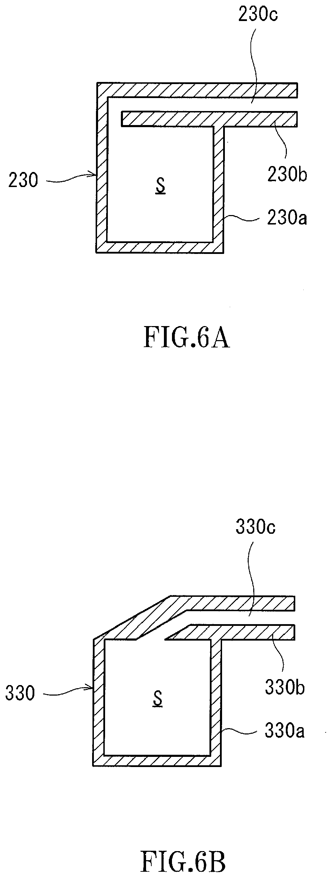

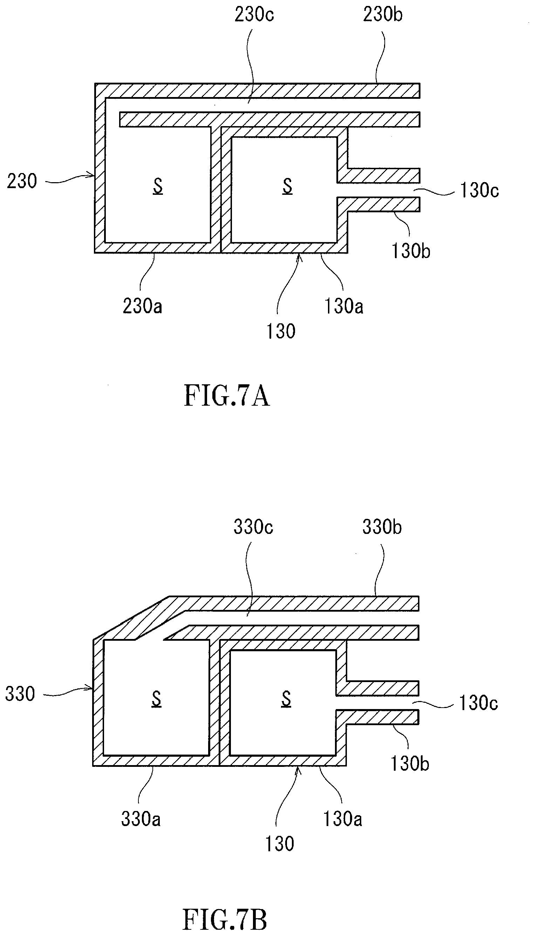

FIGS. 6A, 6B, 7A, and 7B are sectional views schematically showing Modified Examples 2 to 5 of the resonator. It should be noted that each of the resonators according to Modified Example 2 to 5 is formed separately from the bulkhead as with Modified Example 1, but may be formed integrally with the bulkhead as with Embodiment 1.

As shown in FIG. 6A, in a resonator 230 according to Modified Example 2, the position of a container portion 230a in the direction along the axis X (see FIG. 3) of the fuel injector 10 overlaps the position of a tubular portion 230b in the direction along the axis X of the fuel injector 10. The container portion 230a defines the resonance chamber S. The tubular portion 230b defines a port portion 230c and projects from the container portion 230a. The port portion 230c communicates with the resonance chamber S. More specifically, the position of the port portion 230c in the axial direction overlaps the position of the resonance chamber S in the axial direction. The port portion 230c makes a detour (detours around the resonance chamber S) and then communicates with the resonance chamber S. According to this configuration, a vibration frequency to be absorbed can be changed by changing the length of the port portion 230c.

As shown in FIG. 6B, a resonator 330 according to Modified Example 3 is basically the same as Modified Example 2. However, an end portion, located close to a container portion 330a, of a tubular portion 330b connected to the container portion 330a has a tapered shape, and a port portion 330c is inclined toward the resonance chamber S at the resonance chamber S side. According to this configuration, the vibration frequency to be absorbed can be changed by changing the length of the port portion 330c. In addition, an outer shape of the resonator 330 can be made smaller than the example shown in FIG. 6A.

In Modified Example 4 shown in FIG. 7A, the resonator 130 according to Modified Example 1 and the resonator 230 according to Modified Example 2 are stacked on each other in the direction along the axis X (see FIG. 3) of the fuel injector 10. In Modified Example 5 shown in FIG. 7B, the resonator 130 according to Modified Example 1 and the resonator 330 according to Modified Example 3 are stacked on each other in the direction along the axis X (see FIG. 3) of the fuel injector 10. According to these configurations, a large number of resonators can be arranged without an increase in size in the radial direction.

The present invention is not limited to the above embodiment. Modifications, additions, and eliminations may be made with respect to the configuration of the embodiment. For example, in the above embodiment, when viewed in the direction along the axis X, the entire resonance chamber S is arranged at the radially inner side of the largest outer diameter portion or virtual cylindrical surface V1 of the outer liner 6. However, when viewed in the direction along the axis X, only part of the resonance chamber S may be arranged at the radially inner side of the largest outer diameter portion or virtual cylindrical surface V1 of the outer liner 6. Moreover, in the above embodiment, when viewed in the direction along the axis X, the entire resonance chamber S is arranged at the radially outer side of the smallest inner diameter portion or virtual cylindrical surface V2 of the inner liner 7. However, when viewed in the direction along the axis X, only part of the resonance chamber S may be arranged at the radially outer side of the smallest inner diameter portion or virtual cylindrical surface V2 of the inner liner 7. Moreover, each of outer shapes of the resonators 30 and 130 may have the shape of the cowl 16 (see FIG. 2), and the cowl 16 may be omitted. Thus, each of the resonators 30 and 130 itself may serve as a cowl.

### Reference Signs List

- 1: annular gas turbine combustor
- 6: outer liner
- 6a: upstream end
- 7: inner liner
- 7a: upstream end
- 8: combustion chamber
- 9: fuel injector arrangement space
- 10: fuel injector
- 13: stem
- 25: outside main swirler
- 27, 127: bulkhead
- 27a: dividing wall main body portion
- 27b: projecting wall portion
- 27c, 127c: opening
- 27d: protruding portion
- 30, 130: resonator
- 31: lid portion
- 32: heat shield
- 32a: exposure hole
- H1: through hole
- H2: through hole
- S: resonance chamber

## Claims

1. An annular gas turbine combustor for use in an aircraft,
the annular gas turbine combustor comprising:
an annular combustion chamber surrounded by an annular inner liner and an annular outer liner;
a plurality of fuel injectors configured to inject fuel into the combustion chamber and arranged in a fuel injector arrangement space, located upstream of the combustion chamber, so as to be provided in an annular shape along the combustion chamber;
a bulkhead configured to separate the combustion chamber and the fuel injector arrangement space from each other and including through holes through which the fuel injectors are exposed to the combustion chamber; and
a plurality of resonators including respective resonance chambers and arranged in the fuel injector arrangement space so as to be lined up with the fuel injectors in a radial direction of the fuel injector, wherein:
the bulkhead includes a plurality of openings each of which is arranged between each resonance chamber and the combustion chamber;
the resonance chambers communicate with the combustion chamber through the openings; and
at least part of each of the resonance chambers is arranged at a radially inner side of a largest outer diameter portion of the outer liner when viewed in an axial direction of the fuel injector.

2. The annular gas turbine combustor according to claim 1, wherein at least part of each of the resonators is formed integrally with the bulkhead.

3. The annular gas turbine combustor according to claim 2, wherein:
the bulkhead includes
a dividing wall main body portion configured to separate the combustion chamber and the fuel injector arrangement space from each other and
a projecting wall portion projecting from the dividing wall main body portion toward the fuel injector arrangement space;
each of the resonators is constituted by
the dividing wall main body portion,
the projecting wall portion, and
a lid portion covering a space, surrounded by the dividing wall main body portion and the projecting wall portion, from the fuel injector arrangement space side;
each of the resonance chambers is defined by the dividing wall main body portion, the projecting wall portion, and the lid portion; and
the openings are formed at the dividing wall main body portion and communicate with the respective resonance chambers.

4. The annular gas turbine combustor according to claim 1, wherein:
each of the resonators includes
a container portion defining the resonance chamber and
a tubular portion defining a port portion and projecting from the container portion, the port portion communicating with the resonance chamber;
the tubular portions of the resonators are inserted into the respective openings of the bulkhead; and
the resonance chambers communicate with the combustion chamber through the port portions arranged at the openings.

5. The annular gas turbine combustor according to any one of claims 1 to 4, further comprising:
a combustor casing; and
stems by which the fuel injectors are fixed to the combustor casing, wherein
each of the resonators is arranged between the bulkhead and the corresponding stem in the axial direction.

6. The annular gas turbine combustor according to any one of claims 1 to 5, wherein each of the resonators is arranged so as to be separated from the fuel injector outward in the radial direction with a gap.

7. The annular gas turbine combustor according to claim 6, wherein:
each of the fuel injectors includes a swirler provided at an outer peripheral portion of the fuel injector and configured to take in air from an outside in the radial direction; and
each of the resonators is arranged so as to sandwich the gap together with the swirler.

8. The annular gas turbine combustor according to any one of claims 1 to 7, wherein the plurality of resonators comprise resonators arranged in a space between the fuel injectors lined up in an annular shape at intervals.

9. The annular gas turbine combustor according to any one of claims 1 to 8, wherein the plurality of resonators include resonators arranged along at least one of an upstream end of the inner liner and an upstream end of the outer liner when viewed in the axial direction of the fuel injector.

10. The annular gas turbine combustor according to any one of claims 1 to 9, wherein the plurality of resonators include resonators having the respective resonance chambers which are different in volume from each other.

11. The annular gas turbine combustor according to any one of claims 1 to 10, further comprising a heat shield covering the bulkhead from the combustion chamber side, wherein:
the bulkhead includes protruding portions projecting toward the heat shield and including the respective openings; and
the heat shield includes exposure holes in which the protruding portions of the bulkhead are fitted.
